# EUROPEAN PATENT APPLICATION

(11) **EP 4 852 420 A1**
(43) Date of publication of application: **09.12.2026**
(21) Application number: 25757897.1
(22) Date of filing: 14.02.2025
(51) Int. Cl.: H04N 7/18, G06T 7/80, H04N 21/24, H04N 21/2662, H04N 23/60, H04N 23/63, H04N 23/66

(54) **VIDEO SWITCHING COMPUTER, OBSERVATION DEVICE, VIDEO SWITCHING METHOD, AND PROGRAM**

(30) Priority: 21.02.2024 JP 2024024510
(71) Applicant: Jizaie Inc., Tokyo, 100-0004 (JP); KOBELCO CONSTRUCTION MACHINERY CO., LTD., Hiroshima-shi, Hiroshima 731-5161 (JP)
(72) Inventor: NAKAGAWA, Junki, Tokyo 100-0004 (JP); OHTA, Tomotaka, Tokyo 100-0004 (JP); NAKANO, Tomu, Tokyo 100-0004 (JP); MIURA, Kouki, Tokyo 100-0004 (JP); KOIWAI, Kazushige, Hiroshima 731-5161 (JP); KAMIMURA, Yusuke, Hiroshima 731-5161 (JP); NOBORIDATE, Akira, Tokyo 141-8626 (JP); TANAKA, Kiyokazu, Hiroshima 731-5161 (JP); UESUGI, Kazuhiro, Hiroshima 731-5161 (JP); IHARA, Shunya, Hiroshima 731-5161 (JP)
(74) Representative: TBK
(86) International application number: PCT/JP2025/004976
(87) International publication number: WO 2025/177960

(57) **Abstract**

A video switching computer (1) receives importance levels for videos, sets display ranks for the videos based on the received importance levels, sends instructions to observation devices (2) corresponding respectively to the videos such that image quality for the videos is set based on the display ranks, acquires, from the observation devices (2), the videos having the image quality set by the observation devices (2), and causes a terminal (3) to output the acquired videos in accordance with the display ranks.

## Description

### Technical Field

The present invention relates to a video switching computer, an observation device, a video switching method, and a program.

### Background Art

Conventionally, there is a case where a work machine or the like is remotely operated particularly in a dangerous site such as a construction site. Imaging devices, such as fixed cameras installed at a plurality of places in such a site, a camera mounted on a drone, and a mobile camera installed in a portable device perform work support for providing work-related persons, such as a worker, a manager and the like, in various remote places with a status of the site (for example, Patent Literatures 1 and 2).

### Citation List

### Patent Literature

Patent Literature 1: WO 2021/070214 pamphlet
Patent Literature 2: JP 7029586 B2

### Summary of Invention

An object of the present invention is to provide a computer capable of causing a terminal to output videos acquired from observation devices in accordance with importance levels even in an environment where an amount of transmitted data that can be used for the videos is limited.

A provided invention is a video switching computer for switching between videos from a plurality of distributed observation devices, the video switching computer including an importance level reception unit that receives importance levels for the videos, a display rank setting unit that sets display ranks for the videos based on the received importance levels, an instruction unit that sends instructions to the observation devices corresponding respectively to the videos such that image quality for the videos is set based on the display ranks, an acquisition unit that acquires, from the observation devices, the videos having the image quality set by the observation devices, and an output unit that causes a terminal to output the acquired videos in accordance with the display ranks.

### Brief Description of Drawings

FIG. 1 is a diagram for describing an outline of a system including a video switching computer 1 according to an embodiment of the present invention, observation devices, and a terminal.
FIG. 2 is a configuration diagram of the system including the video switching computer 1 according to the present embodiment, the observation device, and the terminal.
FIG. 3 is a flowchart of video switching processing executed by the video switching computer 1 according to the present embodiment.
FIG. 4 is a diagram for describing an example of video switching that the video switching computer 1 according to the present embodiment causes a terminal 3 to display (output).
FIG. 5 is a diagram for describing another example of the video switching that the video switching computer 1 according to the present embodiment causes the terminal 3 to display (output).
FIG. 6 is a diagram for describing video output processing executed by the video switching computer 1 according to the present embodiment.
FIG. 7 is a diagram for describing video distribution processing executed by the observation device 2 constituting the present embodiment.

### Description of Embodiments

In the following, an embodiment for carrying out the present invention (hereinafter, an embodiment) will be described in detail with reference to the drawings. In the drawings, the same elements are denoted by the same numbers or reference numerals throughout the description of the embodiment.

### [Basic Concept/Basic Configuration]

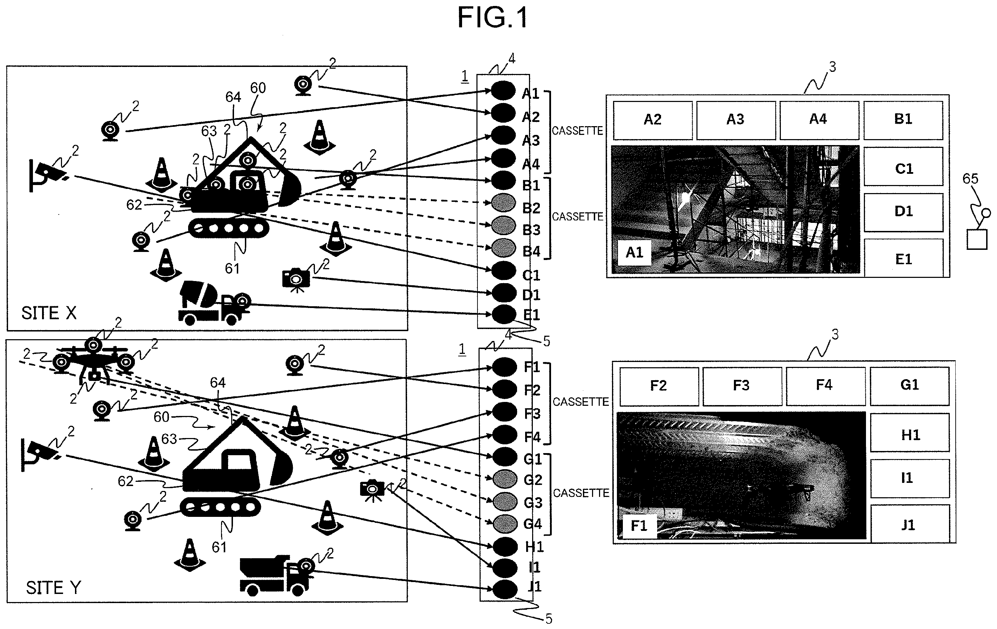

FIG. 1 is a diagram for describing an outline of a video switching system as a system including a video switching computer 1 according to an embodiment of the present invention, a plurality of observation devices 2, and a terminal 3. Hereinafter, the video switching computer 1 may be simply referred to as a computer 1.

As illustrated in FIG. 1, the computer 1 has a function as a media server, and is data-communicably connected to the plurality of observation devices 2 and terminal 3 via a network such as an Internet line or a mobile phone network, a network constructed by virtualization using software, or the like. Each of the number of the observation devices 2 and the number of the terminals 3 may be one or more. The plurality of observation devices 2 may be simultaneously connected to the computer 1, and the observation device 2 and the terminal 3 may be simultaneously connected to the computer 1. The plurality of observation devices 2 may be installed at one site or may be installed at a plurality of sites (for example, a site X and a site Y as illustrated in FIG. 1). Each of the plurality of observation devices 2 is, for example, an imaging device such as a video camera that observes a remote operation status of a work machine that can be remotely operated, such as a robot arm, an excavator, a crane, a bulldozer, or a transport vehicle. The terminal 3 acquires a video captured by the observation device 2 via the video switching computer 1 and displays it.

The computer 1 may be a computer or computing system of on-premises, such as an on-premises server or an on-premises computing system, or may be a cloud-based computer or computing system, such as a cloud server or a cloud computing system. In the present embodiment, the computer 1 is a cloud computing system. As described later, the computer 1 may be a personal computer, a computer mounted on a mobile terminal, or a computer mounted on a wearable terminal.

The observation device 2 may be a device such as a camera, a temperature sensor, or a metal detector. A video captured by the observation device 2 may be data such as video data, image data, and numerical data. The video switching computer 1 may acquire the data from the observation device 2 via the network, or may acquire the data via a system (not illustrated) that controls remote work, other than the observation device 2.

The terminal 3 is a terminal capable of transmitting and receiving data between the terminal 3 and the video switching computer 1. The terminal 3 may be, for example, an electronic device such as a laptop computer, a desktop computer, a smartphone, or a tablet terminal.

As illustrated in FIG. 1, the computer 1 includes at least one video channel 4. The video channel 4 includes a plurality of ports 5. A unique port number (identifier) may be assigned to each of the plurality of ports 5. The video channel 4 may be, for example, a data channel in a peer-to-peer communication connection system. Examples of communication based on the peer-to-peer communication connection system include WebRTC (web real-time communication).

The computer 1 receives an importance level for a video received at each port 5, and optimally sets a display rank for the video to be displayed on the terminal 3 based on the importance level. The importance level may be an attention level for the video by a user of the terminal 3. The computer 1 may set the importance level for the video based on information received from the observation device 2, may set the importance level for the video based on input by the user of the terminal 3, or may estimate and set the importance level for the video by using a learned model constructed by machine learning. The computer 1 may set the display rank for a video (associated video) associated with a video having the highest display rank to cause the terminal 3 to output the associated video in the vicinity of the video having the highest display rank. Specifically, for example, the computer 1 may set the display rank for the associated video within a preset display rank range to cause the terminal 3 to output the associated video in the vicinity of the video having the highest display rank, or may set the display rank for the associated video to be raised by a predetermined rank from the display rank before the change such that the associated video is output in the vicinity of the video having the highest display rank on the terminal 3.

The computer 1 may associate a video (nearby video) from an observation device 2 located near the observation device 2 that captures the video having the highest display rank as a video in the same group (a video of the same cassette) as the video having the highest display rank. In this case, the computer 1 may set the display rank to raise the display rank for the nearby video included in the group. Specifically, for example, the computer 1 may set the display rank for the nearby video within a preset display rank range such that the nearby video is output in the vicinity of the video having the highest display rank on the terminal 3, or may set the display rank for the nearby video to be raised by a predetermined rank from the display rank before the change such that the nearby video is output in the vicinity of the video having the highest display rank on the terminal 3.

Note that the video associated with the video having the highest display rank may be, for example, a video showing the same place as the place where the video having the highest display rank shows, or may be a video showing the same machine as the machine that the video having the highest display rank shows.

The vicinity of the video having the highest display rank may be, for example, a position next to the video having the highest display rank on a screen of the terminal 3. Specifically, as illustrated in FIG. 1, the vicinity of a video A1 having the highest display rank may be, for example, a position next to and above the video A1 having the highest display rank on the screen of the terminal 3, a position next to and below the video A1 having the highest display rank, or a position next to and beside (on the right or left of) the video A1 having the highest display rank.

The observation device 2 located near the observation device 2 that captures the video having the highest display rank may be, for example, an observation device 2 whose distance from the observation device 2 that captures the video having the highest display rank is equal to or less than a predetermined threshold value among the plurality of observation devices 2.

The computer 1 notifies the observation device 2 corresponding to each video to increase the image quality for the video whose display rank is set high and to decrease the image quality for the video whose display rank is set low. As a result, the observation device 2 can provide the computer 1 with the video having the image quality corresponding to the notification.

As illustrated in FIG. 1, the computer 1 acquires the videos from the plurality of observation devices 2 observing the site X and the site Y through the video channel 4. The computer 1 may have only a single video channel 4, but may have a plurality of channels 4 including a first video channel 4 and a second video channel 4. In this case, the computer 1 may acquire the videos from a plurality of observation devices 2 observing the site X through the first video channel 4, and acquire the videos from a plurality of observation devices 2 observing the site Y through the second video channel 4. In the present embodiment, each video channel 4 is constituted by the plurality of ports 5 set in accordance with the display rank. The computer 1 acquires the video from each observation device 2 through the port 5 corresponding to the display rank for the video.

The computer 1 acquires the videos transmitted from the plurality of observation devices 2, and causes the terminal 3 to display (output) the acquired videos in accordance with the display ranks. Specifically, in the computer 1, each port 5 of the video channel 4 is opened to the terminal 3, the terminal 3 can thus acquire the videos corresponding to the display ranks set by the computer 1 with the image quality corresponding to the display ranks, and can display the acquired videos on the screen of the terminal 3. As in a display example of the terminal 3 in FIG. 1, the computer 1 may cause the terminal 3 to display a video (A1, F1) having the highest display rank in an enlarged manner. That is, the computer 1 may cause the terminal 3 to output the video having the highest display rank in a larger size than the other videos. Specifically, in a case of causing the terminal 3 to display the videos of the site X, the computer 1 may cause the terminal 3 to output the video A1 having the highest display rank in a larger size than the other videos such as a video A2 as illustrated in FIG. 1. In a case of causing the terminal 3 to display the videos of the site Y, the computer 1 may cause the terminal 3 to output the video F1 having the highest display rank in a larger size than the other videos such as a video F2 as illustrated in FIG. 1. For example, in a case where the display rank for the video A1 is changed from second or lower to the highest, the computer 1 may cause the terminal 3 to output the video A1 with a size larger than the size (original size) of the video A1 when the display rank is second or lower. The computer 1 may cause a video having a low display rank not to be displayed. Specifically, the computer 1 may cause a video whose display rank is equal to or less than a predetermined threshold value not to be displayed. Note that the video channel 4 in the present embodiment may be or is not required to be divided into a channel for video acquisition and a channel for video output.

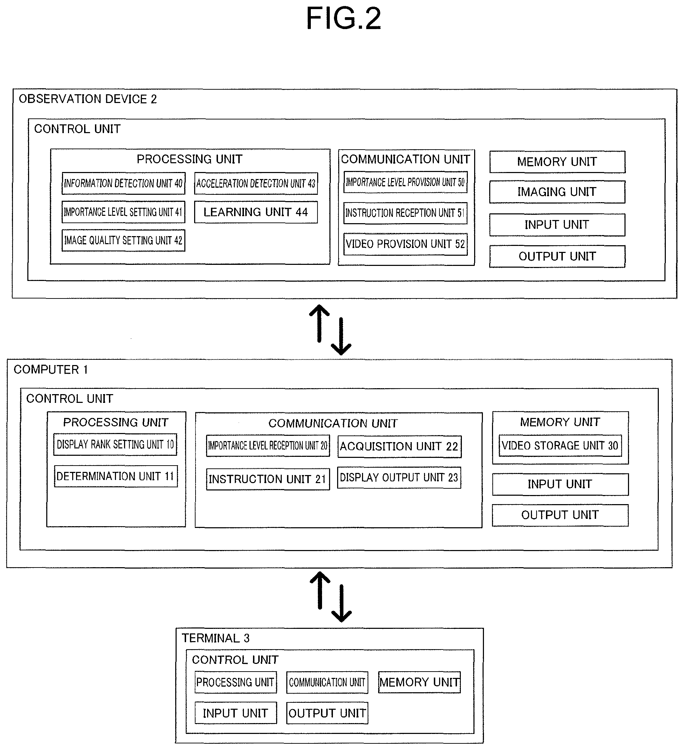

FIG. 2 is a configuration diagram of the video switching system as a system including the video switching computer 1 according to the present embodiment, the plurality of observation devices 2, and the terminal 3. The computer 1 may be implemented by, for example, one terminal device or a plurality of terminal devices.

As described above, the computer 1 may be a computer or computing system of on-premises, or may be a cloud-based computer or computing system. The computer 1 may be, for example, a personal computer such as a desktop computer or a laptop computer. The computer 1 may be, for example, a computer mounted on a portable terminal such as a handy terminal, a smartphone, or a tablet terminal, or may be a computer mounted on a wearable terminal such as smart glasses, a head mounted display, or a smart watch. In this case, the computer 1 may include an image capturing device, such as a camera, that captures an image such as a color moving image and/or a still image.

The computer 1 includes a processor and a memory. Examples of the processor include a CPU (central processing unit) and a GPU (graphics processing unit). Examples of the memory include a RAM (random access memory) and a ROM (read only memory). The computer 1 includes a control unit. The function of the control unit is implemented by the processor executing a program stored in the memory. As illustrated in FIG. 2, the control unit includes a processing unit, a communication unit, a memory unit, an input unit, and an output unit. The control unit issues an execution command to the processing unit, the communication unit, the input unit, the output unit, the memory unit, and the like, and the processing unit calculates data, determines a calculation result, and the like.

The computer 1 includes, as a communication unit, a device that enables the computer 1 to communicate with other devices such as the terminal 3 and the observation devices 2. The communication method may be wireless or wired.

The computer 1 has, as an input unit, a function necessary for the user to operate the computer 1. The computer 1 includes an input device for inputting. For example, the computer 1 can include, as the input device, a liquid crystal display that implements a touch panel function, a keyboard, a mouse, a pen tablet, a hardware button on the device, a microphone for performing audio recognition, and the like. The input unit of the computer 1 is not limited to the above input method.

The computer 1 has, as an output unit, a function necessary for the user to operate the computer 1. The computer 1 includes an output device for outputting. For example, the computer 1 may include a display device or an audio output device as an output device. Examples of the display device include a liquid crystal display, a PC display, a projector, and a head-mounted display, and examples of the audio output device include a speaker. The output unit of the computer 1 is not limited to the above output method.

The computer 1 includes a storage (recording medium) of data, such as a hard disk, a semiconductor memory, and a memory card, as a memory unit. The save destination of the data may be a cloud service, a database, or the like. For example, the memory unit may save some or all of the videos acquired from the observation devices 2 as data. In this case, the computer 1 may be configured to be able to search the video data saved in the memory unit.

The processing unit of the control unit includes a display rank setting unit 10 and a determination unit 11. The communication unit of the control unit includes an importance level reception unit 20, an instruction unit 21, an acquisition unit 22, and a display output unit 23. The memory unit of the control unit includes a video storage unit 30.

The observation device 2 may be a device such as a camera, a temperature sensor, or a metal detector, for example. The observation device 2 includes an imaging unit that captures a video. The observation device 2 may be, for example, a portable terminal such as a handy terminal, a smartphone, or a tablet terminal, or may be a wearable terminal such as smart glasses, a head mounted display, or a smart watch.

The observation device 2 includes a processor and a memory. Examples of the processor include a CPU (central processing unit) and a GPU (graphics processing unit). Examples of the memory include a RAM (random access memory) and a ROM (read only memory). The observation device 2 includes a control unit. The function of the control unit is implemented by the processor executing a program stored in the memory. As illustrated in FIG. 2, the control unit includes a processing unit, a communication unit, a memory unit, an imaging unit, an input unit, and an output unit. The control unit issues an execution command to the processing unit, the imaging unit, the communication unit, the input unit, the output unit, the memory unit, and the like, and the processing unit calculates data, determines a calculation result, and the like.

The observation device 2 includes, as a communication unit, a device that enables the observation device 2 to communicate with other devices such as the computer 1 and the terminal 3. The communication method may be wireless or wired.

The observation device 2 has, as an input unit, a function necessary for the user to operate the observation device 2. The observation device 2 includes an input device for inputting. For example, the observation device 2 can include, as the input device, a liquid crystal display that implements a touch panel function, a keyboard, a mouse, a pen tablet, a hardware button on the device, a microphone for performing audio recognition, and the like. The input unit of the observation device 2 is not limited to the above input method.

The observation device 2 has, as an output unit, a function necessary for the user to operate the observation device 2. The observation device 2 includes an output device for outputting. For example, the observation device 2 may include a display device or may include an audio output device as an output device. Examples of the display device include a liquid crystal display, a PC display, and a projector, and examples of the audio output device include a speaker. The output unit of the observation device 2 is not limited to the above output method.

The observation device 2 includes a storage (recording medium) of data, such as a hard disk, a semiconductor memory, and a memory card, as a memory unit. The save destination of the data may be a cloud service, a database, or the like.

The processing unit of the control unit includes an information detection unit 40, an importance level setting unit 41, an image quality setting unit 42, an acceleration detection unit 43, and a learning unit 44. The communication unit of the control unit includes an importance level provision unit 50, an instruction reception unit 51, and a video provision unit 52.

As described above, the terminal 3 may be, for example, a personal computer such as a desktop computer or a laptop computer, a portable terminal such as a handy terminal, a smartphone, or a tablet terminal, a wearable terminal such as smart glasses, a head-mounted display, or a smartwatch, or another type of information terminal. The terminal 3 may include an image capturing device, such as a camera, that captures an image such as a color moving image and/or a still image.

The terminal 3 includes a processor and a memory. Examples of the processor include a CPU (central processing unit) and a GPU (graphics processing unit). Examples of the memory include a RAM (random access memory) and a ROM (read only memory). The terminal 3 includes a control unit. The function of the control unit is implemented by the processor executing a program stored in the memory. As illustrated in FIG. 2, the control unit includes a processing unit, a communication unit, an input unit, an output unit, and a memory unit. The control unit issues an execution command to the processing unit, the communication unit, the input unit, the output unit, the memory unit, and the like, and the processing unit calculates data, determines a calculation result, and the like.

The terminal 3 includes, as a communication unit, a device that enables the terminal 3 to communicate with other devices such as the computer 1 and the observation devices 2. The communication method may be wireless or wired.

The terminal 3 has, as an input unit, a function necessary for the user to operate the terminal 3. The terminal 3 includes an input device for inputting. For example, the terminal 3 can include, as the input device, a liquid crystal display that implements a touch panel function, a keyboard, a mouse, a pen tablet, a hardware button on the device, a microphone for performing audio recognition, and the like. The input unit of the terminal 3 is not limited to the above input method.

The terminal 3 has, as an output unit, a function necessary for the user to operate the terminal 3. The terminal 3 includes an output device for outputting. For example, the terminal 3 may include a display device or may include an audio output device as an output device. Examples of the display device include a liquid crystal display, a PC display, and a projector, and examples of the audio output device include a speaker. The output unit of the terminal 3 is not limited to the above output method.

The terminal 3 includes a storage (recording medium) of data, such as a hard disk, a semiconductor memory, and a memory card, as a memory unit. The save destination of the data may be a cloud service, a database, or the like.

Note that some or all of the functions of the computer 1 may be implemented in the observation device 2 or the terminal 3 by virtualization of software.

The above is a basic concept and a basic configuration of the video switching system as a system including the video switching computer 1 (distributed video switching computer 1), the observation device 2, and the terminal 3.

### [Video Switching Processing]

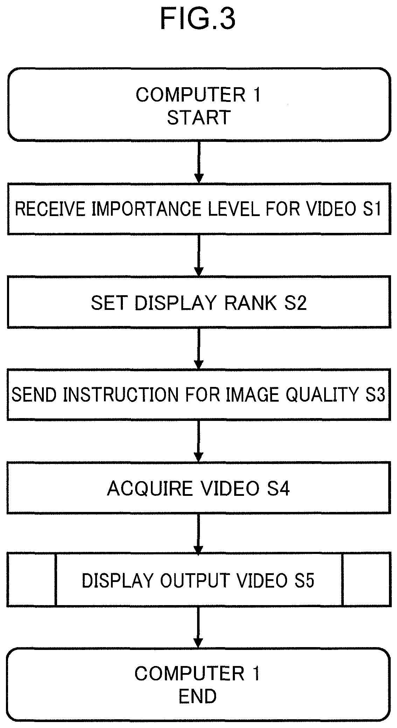

Video switching processing executed by the video switching computer 1 according to the present embodiment will be described based on FIG. 3. FIG. 3 is a flowchart of the video switching processing executed by the video switching computer 1.

The importance level reception unit 20 of the computer 1 receives the importance levels for the videos (step S1). Specifically, the importance level reception unit 20 receives the importance levels for the videos captured by the observation devices 2 from the observation devices 2 communicably connected to the computer 1 via the network. The type of data indicating the importance level is not particularly limited, and may be various types of data, but is preferably numerical data such as a score indicating the importance level for a video. The importance level reception unit 20 may receive, as the importance level for the video, an importance level based on a measurement value detected by a sensor (for example, the observation device 2), or an importance level based on information such as an abnormality detected by the sensor. The importance level reception unit 20 may receive, as the importance level for the video, an importance level based on an input by the user to the input unit of the computer 1 or the input unit of the terminal 3.

Next, the display rank setting unit 10 of the computer 1 sets the display ranks for the videos based on the received importance levels (step S2). Specifically, the display rank setting unit 10 may set the display ranks by using an algorithm such as a ranking algorithm. Note that the type of algorithm is not limited.

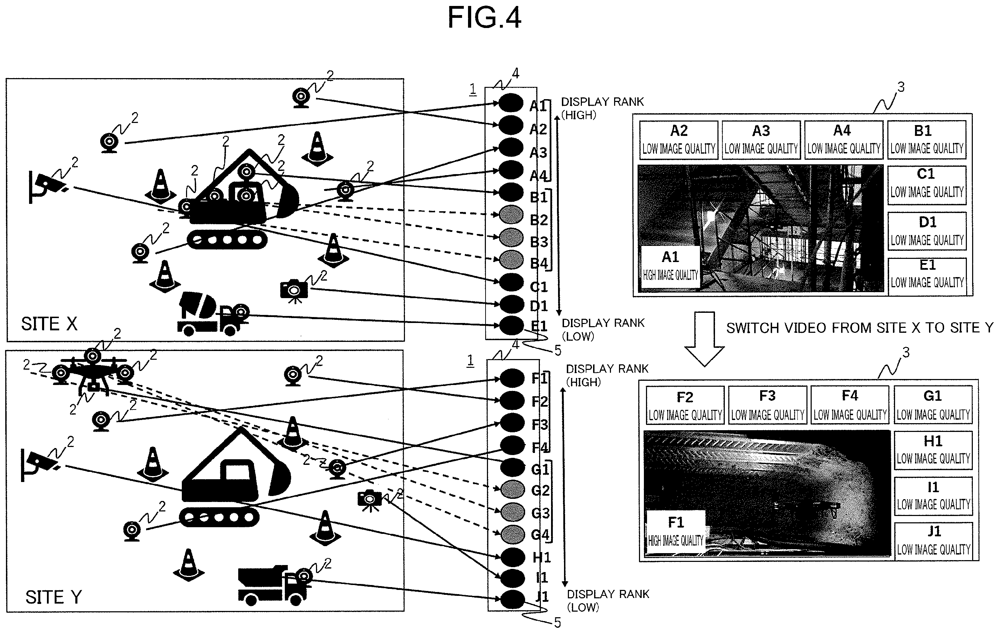

As illustrated in FIG. 4, the display rank setting unit 10 may set the display ranks for the associated videos A2 to A4 associated with the video A1 having the highest display rank among the videos captured by the observation devices 2 at the work site X such that the associated videos A2 to A4 are output in the vicinity of the video A1 having the highest display rank on the terminal 3. Specifically, for example, the display rank setting unit 10 may set the display ranks for the associated videos A2 to A4 within a preset display rank range such that the associated videos A2 to A4 are output in the vicinity of the video A1 having the highest display rank on the terminal 3, or may set the display ranks for the associated videos A2 to A4 to be raised by a predetermined rank from the display ranks before the change such that the associated videos A2 to A4 are output in the vicinity of the video A1 having the highest display rank on the terminal 3.

The display rank setting unit 10 may set display ranks for associated videos F2 to F4 associated with the video F1 having the highest display rank among the videos captured by the observation devices 2 at the work site Y such that the associated videos F2 to F4 are output in the vicinity of the video F1 having the highest display rank on the terminal 3. Specifically, for example, the display rank setting unit 10 may set the display ranks for the associated videos F2 to F4 within a preset display rank range such that the associated videos F2 to F4 are output in the vicinity of the video F1 having the highest display rank on the terminal 3, or may set the display ranks for the associated videos F2 to F4 to be raised by a predetermined rank from the display ranks before the change such that the associated videos F2 to F4 are output in the vicinity of the video F1 having the highest display rank on the terminal 3.

The display rank setting unit 10 may associate the associated videos A2 to A4 as videos of the same group as the video A1 having the highest display rank (videos of the same cassette), and set the display ranks such that the associated videos A2 to A4 included in the same group are output in the vicinity of the video A1 on the terminal 3. Specifically, for example, the display rank setting unit 10 may set the display ranks for the videos A2 to A4 included in the same group within a preset display rank range such that the videos A2 to A4 included in the same group are output in the vicinity of the video A1 on the terminal 3, or may set the display ranks for the videos A2 to A4 included in the same group to be raised by a predetermined rank from the display ranks before the change such that the videos A2 to A4 included in the same group are output in the vicinity of the video A1 on the terminal 3.

Similarly, the display rank setting unit 10 may associate the associated videos F2 to F4 as videos of the same group as the video F1 having the highest display rank (videos of the same cassette), and set the display ranks such that the associated videos F2 to F4 included in the same group are output in the vicinity of the video F1 on the terminal 3. Specifically, for example, the display rank setting unit 10 may set the display ranks for the videos F2 to F4 included in the same group within a preset display rank range such that the videos F2 to F4 included in the same group are output in the vicinity of the video F1 on the terminal 3, or may set the display ranks for the videos F2 to F4 included in the same group to be raised by a predetermined rank from the display ranks before the change such that the videos F2 to F4 included in the same group are output in the vicinity of the video F1 on the terminal 3.

In a case where the video from the observation device 2 located near the observation device 2 that captures the video A1 having the highest display rank at the site X is, for example, a video B1, and the video from the observation device 2 located near the observation device 2 that captures the video F1 having the highest display rank at the site Y is, for example, a video G1, the display rank setting unit 10 may set the display rank to raise the display rank for the video B1 at the site X, and may set the display rank to raise the display rank for the video G1 at the site Y. Specifically, for example, the display rank setting unit 10 may set the display rank for the video B1 within a preset display rank range, or may set the display rank for the video B1 to be raised from the display rank before the change by a predetermined rank. Similarly, the display rank setting unit 10 may set the display rank for the video G1 within a preset display rank range, or may set the display rank for the video G1 to be raised from the display rank before the change by a predetermined rank.

Next, the instruction unit 21 of the computer 1 sends instructions to the observation devices 2 corresponding respectively to the videos such that the image quality for the videos is set based on the display ranks (step S3). Specifically, the instruction unit 21 sends instructions (image quality instructions) to the observation devices 2 that capture the videos to increase or decrease the image quality for the videos in accordance with the display ranks. The image quality may include resolution and/or a frame rate, and the instruction unit 21 may send instructions to increase or decrease the resolution and/or the frame rates of the videos to the observation devices 2 as the image quality instructions. A specific form of the image quality such as the number of stages of the resolution and the number of stages of the frame rate is not limited.

The observation devices 2 respectively set the image quality for the videos based on the image quality instructions acquired from the computer 1. The image quality instruction may include image quality instruction information for instructing the image quality for a video. In this case, the observation device 2 may set the image quality for the video based on the image quality instruction information. The image quality instruction may include display rank information about a display rank for the video. In this case, a map such as a relational expression and a table representing the relationship between the display rank and the image quality may be set in advance in the observation device 2, and the observation device 2 may set the image quality for the video based on the map and the display rank information.

Next, the acquisition unit 22 of the computer 1 acquires the videos having the image quality set by the observation devices 2 from the observation devices (step S4). Specifically, the acquisition unit 22 acquires the videos having the image quality set by the observation devices 2 from the observation devices 2 in the video channel 4 of the computer 1. The acquisition unit 22 may acquire a signal that is generated by the observation device 2 and is for setting a value such as luminance or contrast low. The signal generated by the observation device 2 will be described later. Furthermore, the acquisition unit 22 may store the acquired video in the video storage unit 30 based on the importance level received in step S1 described above. Specifically, for example, in a case where the importance level for the video acquired in step S4 is equal to or more than a predetermined threshold value, the acquisition unit 22 may store the video in the video storage unit 30.

In the present embodiment, that the video storage unit 30 stores the video may be that, for example, in the computer 1 such as a server, the video to be stored is stored in a standby state that is a state in which the video can be instantaneously displayed on the terminal 3 as necessary. The standby state is a state in which a video is transmitted from the observation device 2 to the computer 1 and the computer 1 does not transmit the video to the terminal 3. Specifically, the standby state is a state in which a video is transmitted from the observation device 2 to the computer 1, the computer 1 does not transmit the video to the terminal 3, and the computer 1 can quickly access the video. The display output unit 23 can cause the terminal 3 to instantaneously display the video stored in the video storage unit 30 (the video in the standby state) as necessary.

The acquisition unit 22 may determine whether there is a lot of motion in the video by recognizing the acquired video (for example, performing image recognition). Specifically, when determining that the motion in the video satisfies a predetermined condition, the acquisition unit 22 may store the acquired video in the video storage unit 30 by raising the received importance level (for example, raising the importance level to equal to or more than the predetermined threshold value). The predetermined condition may be, for example, that a moving speed of an object in the video is greater than a predetermined threshold value, that an acceleration of the object in the video is larger than a predetermined threshold value, or that a moving distance of the object in the video is longer than a predetermined threshold value.

In the example illustrated in FIG. 4, the computer 1 is provided with the video channel 4, and the video channel 4 includes the plurality of ports 5 (for example, 11 ports 5), but the number of ports 5 is not limited to the specific example illustrated in FIG. 4. The plurality of ports 5 is set in advance in accordance with the display ranks. That is, the plurality of ports 5 and the display ranks may be associated with each other. The acquisition unit 22 acquires the videos corresponding to the display ranks at the plurality of ports 5. That is, the acquisition unit 22 acquires a video having a high display rank through a port 5 having a high display rank, and acquires a video having a low display rank through a port 5 having a low display rank.

Next, the display output unit 23 of the computer 1 causes the terminal 3 to output the acquired videos in accordance with the display ranks (step S5). Specifically, in the display output unit 23, by opening each of the ports 5 of the video channel 4 to the terminal 3, the terminal 3 can acquire the videos corresponding to the display ranks set by the display rank setting unit 10 with the image quality corresponding to the display ranks, and can display the acquired videos on the screen of the terminal 3. As in a display example of the terminal 3 in FIG. 4, the display output unit 23 may cause the terminal 3 to display the video (A1, F1) having the highest display rank in an enlarged manner. Specifically, in a case of causing the terminal 3 to display the videos of the site X, the computer 1 may cause the terminal 3 to output the video A1 having the highest display rank in a larger size than the other videos such as the video A2 as illustrated in FIG. 4, and in a case of causing the terminal 3 to display the videos of the site Y, the computer 1 may cause the terminal 3 to output the video F1 having the highest display rank in a larger size than the other videos such as the video F2 as illustrated in FIG. 4.

The display output unit 23 of the computer 1 may extract a video from the video storage unit 30 in accordance with the display rank and cause the terminal 3 to display the video. In this case, the display output unit 23 can cause the terminal 3 to smoothly display the video (for example, one or a plurality of videos) in the standby state in the video storage unit 30 in accordance with the display rank.

FIG. 4 illustrates a case where the videos of the site X are switched to the videos of the site Y on the terminal 3 as an example of video switching. For example, as illustrated in the terminal 3 drawn on the upper right in FIG. 4, in the terminal 3 that displays the videos of the site X, the video A1 having the highest display rank is displayed at a high resolution and/or a high frame rate in an enlarged manner, the associated videos A2 to A4 associated with the video A1 are displayed at a low resolution and/or a low frame rate in the vicinity of (above) the video A1 as videos of the same group (videos of the same cassette), and the videos B1 to E1 are displayed in accordance with the display ranks. When the display ranks change so as to display the videos of the site Y, as illustrated in the terminal 3 drawn at the lower right in FIG. 4, the video F1 having the highest display rank is displayed at the high resolution and/or the high frame rate in an enlarged manner, the associated videos F2 to F4 associated with the video F1 are displayed as videos of the same group (videos of the same cassette) in the vicinity of (above) the video F1 at the low resolution and/or the low frame rate, and the videos G1 to J1 are displayed in accordance with the display ranks. By changing the display ranks in this manner, the videos are switched. Note that, as described above, the number of stages of resolution is not limited to two stages of the high resolution and the low resolution. For example, the number of stages of the resolution including the high resolution and the low resolution may be three or more. Similarly, the number of stages of the frame rate is not limited to two stages of the high frame rate and the low frame rate. For example, the number of stages of the frame rate including the high frame rate and the low frame rate may be three or more.

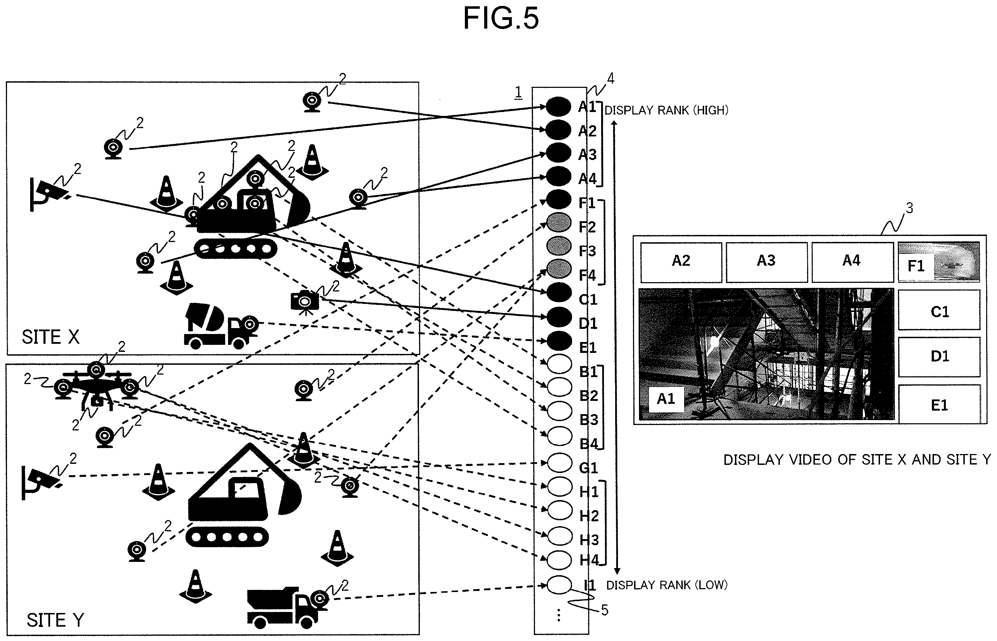

FIG. 5 illustrates another example of the video switching. As illustrated in the terminal 3 drawn on the upper right in FIG. 4, in the terminal 3 that displays the videos of the site X, the video A1 having the highest display rank is displayed at a high resolution and/or a high frame rate in an enlarged manner, the videos A2 to A4 associated with the video A1 are displayed at a low resolution and/or a low frame rate in the vicinity of (above) the video A1 as videos of the same group (videos of the same cassette), and the videos B1 to E1 are displayed in accordance with the display ranks. On the other hand, as illustrated in FIG. 5, the display ranks for the specific videos (B1 to B4) of the site X and the display ranks for the specific videos (F1 to F4) of the site Y are reversed, and then, the video is switched such that the video F1 is displayed at the place where the video B1 has been displayed. As a result, the user of the terminal 3 can also confirm a state of a specific portion of the site Y while monitoring mainly the site X. Note that, as described above, the number of stages of resolution is not limited to two stages of high resolution and low resolution. For example, the number of stages of the resolution including the high resolution and the low resolution may be three or more. Similarly, the number of stages of the frame rate is not limited to two stages of the high frame rate and the low frame rate. For example, the number of stages of the frame rate including the high frame rate and the low frame rate may be three or more.

Note that, as in the display example of the terminal 3 illustrated in the upper right in FIG. 4, the computer 1 may send an instruction to the terminal 3 not to output one or a plurality of videos (for example, the videos B2 to B4) acquired from some of the plurality of observation devices 2, regardless of the display ranks. Similarly, as in the display example of the terminal 3 illustrated in the lower right in FIG. 4, the computer 1 may send an instruction to the terminal 3 not to output one or a plurality of videos (for example, the videos G2 to G4) acquired from some of the plurality of observation devices 2, regardless of the display ranks.

The above is the video switching processing.

### [Video Output Processing]

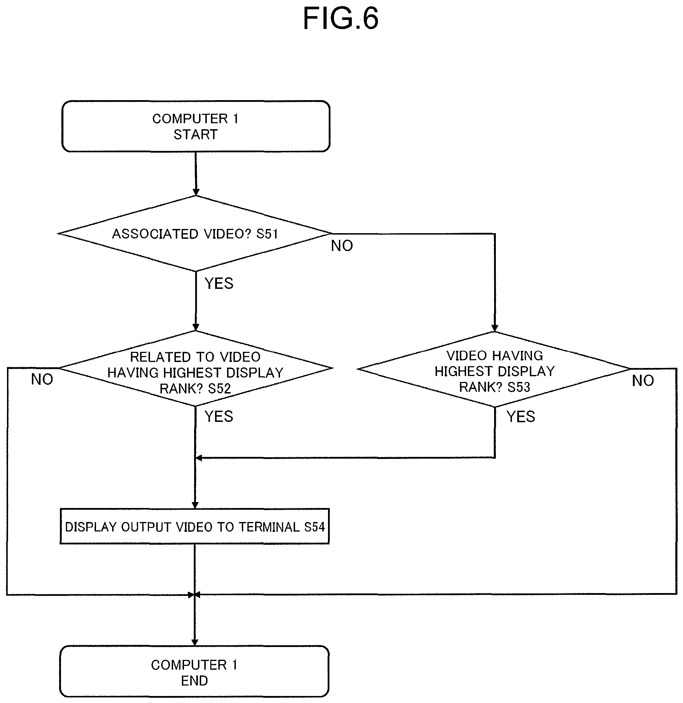

FIG. 6 is a diagram for describing video output processing executed by the video switching computer 1 according to the present embodiment. This processing indicates details of the processing performed in step S5 of the video switching processing described above.

The determination unit 11 of the computer 1 determines whether the video acquired in step S4 described above is the associated video (step S51). Specifically, the determination unit 11 determines whether the video acquired in step S4 is included in the group (cassette) as a sub video.

In step S51 described above, in a case where it is determined that the video acquired in step S4 is the associated video (step S51: YES), the determination unit 11 determines whether the video acquired in step S4 is the video associated with the video having the highest display rank (step S52). Specifically, the determination unit 11 determines whether the video acquired in step S4 is included, as the sub video associated with a main video having the highest display rank, in the same group (cassette) as the main video.

On the other hand, in a case where it is determined in step S51 described above that the video acquired in step S4 is not the associated video (step S51: NO), the determination unit 11 determines whether the display rank for the video acquired in step S4 is the highest (step S53). Specifically, the determination unit 11 determines whether the video acquired in step S4 is the main video having the highest display rank.

In step S52 described above, in a case where it is determined that the video acquired in step S4 is the video associated with the video having the highest display rank (step S52: YES), the display output unit 23 causes the terminal 3 to display (output) the video (step S54), and ends this processing.

In step S52 described above, in a case where it is determined that the video acquired in step S4 is not the video associated with the video having the highest display rank (step S52: NO), the computer 1 ends this processing. At this time, the video is not displayed (output) on the terminal 3, but may be stored in the video storage unit 30 based on the importance level received in step S1 described above.

In step 53 described above, in a case where it is determined that the display rank for the video acquired in step S4 is the highest (step S53: YES), the display output unit 23 causes the terminal 3 to display the video (step S54), and ends this processing. At this time, the display output unit 23 may extract the video from the video storage unit 30 in accordance with the display rank, cause the terminal 3 to display the video, and end this processing.

On the other hand, in a case where it is determined in step 53 described above that the display rank for the video acquired in step S4 is not the highest (step S53: NO), the computer 1 ends this processing. At this time, the video is not displayed (output) on the terminal 3, but may be stored in the video storage unit 30 based on the importance level received in step S1 described above.

The above is the video output processing.

In the video switching computer 1 according to the present embodiment, it is possible to control the amount of transmitted data from a large number of observation devices distributed on the site by sending instructions to the observation devices such that a video having a high importance level is set to a high image quality and a video having a low importance level is set to a low image quality. Therefore, under the environment where the amount of transmitted data that can be used for the videos is limited, even with a minimum necessary infrastructure, it is possible to suppress the occurrence of problems such as video delay and video quality degradation, and it is possible to smoothly switch between videos automatically by the computer 1 or manually by the user in accordance with the importance levels for the videos.

In the video switching computer 1 according to the present embodiment, since the video having the highest display rank is displayed in a large size, the user can monitor in detail the place and/or the machine that the video of the most interest shows even in the minimum necessary infrastructure under an environment where the amount of transmitted data that can be used for the videos is limited.

In the video switching computer 1 according to the present embodiment, since the video having the highest display rank is displayed together with the video associated with the video, the user can monitor in detail the place and/or the machine that the video having the highest importance level shows and the place and/or the machine that the associated video shows even in the minimum necessary infrastructure under the environment where the amount of transmitted data that can be used for the videos is limited.

In the video switching computer 1 according to the present embodiment, a video of a machine and/or a place having a high attention level can be displayed, and a video of a machine and/or a place close to the video can be displayed. Therefore, the user can simultaneously monitor the video of the machine and/or the place of interest and the environment near the machine and/or the place of interest.

In the video switching computer 1 according to the present embodiment, for example, in a case where a sensor or the like installed at the site detects an abnormality or detects that the acceleration of the motion of the object in the video is large, it is possible to raise the display rank for the video of a monitoring target at the place, facility, or the like associated with the abnormality and/or the video of the object whose motion is fast.

In the video switching computer 1 according to the present embodiment, the user of the computer 1 or the user of the terminal 3 can set an importance level for a video in a case where the user wants to switch the video displayed on the terminal 3 to another video, and thus, it is possible to switch the video to be displayed as appropriate by raising or lowering the importance level for the video showing the monitoring target such as the machine operated by the user or the site monitored by the user.

In the video switching computer 1 according to the present embodiment, by increasing the resolution of a video having a high importance level, the video whose details are required is clearly distributed, and by decreasing the resolution of a video having a low importance level, even in a low-speed network environment or with a device having a limited processing capability, these videos can be smoothly distributed, and the user can view these videos. By increasing the frame rate of a video having a high importance level, the video with a lot of fast motion can be distributed, and by decreasing the frame rate of a video having a low importance level, the data size of the video can be suppressed. Therefore, even in a low-speed network environment or an unstable network environment due to movement or the like, these videos can be distributed, and the user can view these videos.

In the video switching computer 1 according to the present embodiment, for example, a video having a high importance level is stored and output of the video is set to the standby state in the computer 1, and thus, the video can be switched without delay automatically by the computer 1 or manually and smoothly by the user even at a site with a poor communication environment. By storing the videos in the computer 1 (server), it is possible to search for a video of an imaging target.

In the video switching computer 1 according to the present embodiment, in a case where the display rank for the stored video is raised, the video whose output is on standby can be immediately accessed and output. Therefore, even at a site with a poor communication environment, the video can be switched by the computer 1 automatically or manually by the user and smoothly without delay.

An example of a flow of processing in which the video storage unit 30 stores a video and processing in which the display output unit 23 causes the terminal 3 to output the stored video will be briefly described as follows.

The video storage unit 30 may determine whether to store a video based on a predetermined storage determination condition, and may store the video in a case where the storage determination condition is satisfied. The display output unit 23 may determine whether to cause the terminal 3 to output the video stored in the video storage unit 30 based on a predetermined output determination condition, and may cause the terminal 3 to output the video in a case where the output determination condition is satisfied.

The storage determination condition may include, for example, a condition that the importance level is equal to or greater than a predetermined threshold value. The output determination condition may include, for example, a condition regarding the presence or absence of a movable monitoring target such as a machine or a person in the stored video. Specifically, the output determination condition may include, for example, a condition that a state in which the movable monitoring target does not exist in the stored video is changed to a state in which the monitoring target exists. The output determination condition may include, for example, a condition regarding a degree of motion of the movable monitoring target in the stored video. Specifically, the output determination condition may be, for example, that a moving speed of the movable monitoring target in the stored video is greater than a predetermined threshold value, that an acceleration of the movable monitoring target in the stored video is larger than a predetermined threshold value, or that a moving distance of the movable monitoring target in the stored video is longer than a predetermined threshold value.

### [Video Distribution Processing]

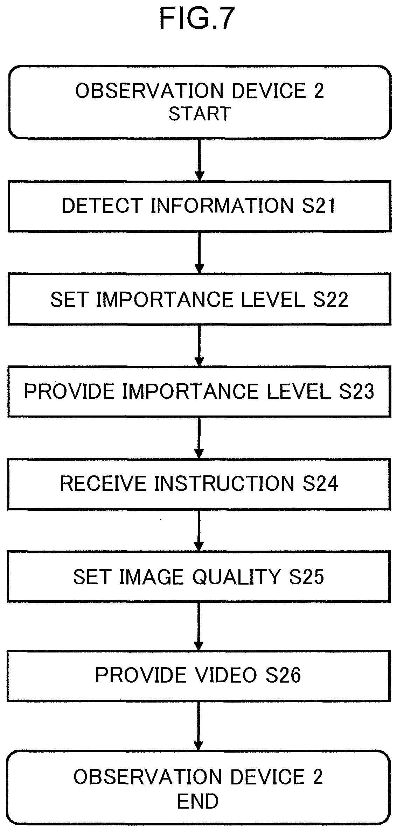

The video distribution processing executed by the observation device 2 according to the present embodiment will be described with reference to FIG. 7. FIG. 7 is a flowchart of the video distribution processing executed by the observation device 2.

The information detection unit 40 of the observation device 2 detects information (video-related information) related to the video captured by the observation device 2 (step S21).

For example, the information detection unit 40 may acquire a sensing result by a sensor and detect the video-related information based on the sensing result. The sensor may be a sensor included in the observation device 2 or a sensor installed at a place different from the observation device 2. The sensor installed at a place different from the observation device 2 may be a sensor installed at a site such as a work site or a manufacturing site, or may be a sensor attached to an object to be monitored at the site.

The information detection unit 40 may detect information (abnormality information) about some abnormality at a site such as a work site or a manufacturing site as the video-related information based on the sensing result by the sensor.

The information detection unit 40 may detect information (object operation information) about a motion of an object to be monitored as the video-related information based on the sensing result by the sensor. Examples of the object to be monitored include a work machine (excavator, crane, transport vehicle, and the like), a person, a structure, and an obstacle existing at a work site. Examples of the object to be monitored include a work machine (forklift truck, transport vehicle, and the like), a person, and a structure existing at a manufacturing site. The object operation information may be, for example, information about the speed of the object to be monitored, information about the acceleration of the object to be monitored, or information about the moving distance of the object to be monitored.

The detection in step S21 may be detection based on a learned model for information detection using artificial intelligence (AI). That is, the information detection unit 40 may detect information (video-related information) related to the video captured by the observation device 2 by using the learned model for information detection. Specifically, for example, the information detection unit 40 may input a determination target portion (for example, an image included in the video) to be determined in the video captured by the observation device 2 to the learned model for information detection, acquire a determination result for an object included in the determination target portion from the learned model for information detection, and detect the video-related information based on the acquired determination result.

For example, the learning unit 44 of the observation device 2 may execute supervised learning for a feature amount of information appearing in the video when the information is detected. As a result, it is possible to accumulate teacher data of workers, particularly skilled workers, and it is possible to optimize work, predict danger in work practice, and the like as future use of data. Such teacher data may be stored in the memory unit of the observation device 2 as additional learning data for automatic detection. The learning unit 44 may learn the feature amount by using a deep learning method of automatically defining and learning the feature amount by a neural network having a multilayer structure. Thereafter, the learning unit 44 may create a learned model for information detection based on the learning result, and the memory unit of the observation device 2 may store the learned model.

In the above specific example, the learning unit 44 of the observation device 2 executes supervised learning to generate the learned model, but the learned model may be generated by a learning device other than the observation device 2. The observation device 2 may store, in the memory unit, the learned model generated by the learning device. The learning device includes a computer. The learning device acquires a training data set including teacher data and a correct answer label, inputs the teacher data to a learning target model, acquires a processing result from the learning target model, and trains the learning target model based on an error between the correct answer label and the processing result in accordance with a learning algorithm.

In a case where the learned model for information detection is trained based on, for example, an error between a determination result of the learning target model for a training image including an object to be determined and a correct answer label indicating a type of the object included in the training image, the information detection unit 40 can input the determination target portion into the learned model for information detection, acquire a determination result from the learned model for information detection, and detect information about an object to be determined as the video-related information based on the acquired determination result. The information detection unit 40 may sequentially input a large number of time-series images included in the video captured by the observation device 2 to the learned model for information detection, and acquire a determination result about the object included in each image from the learned model for information detection, and thus detect, for example, information (object operation information) about the motion of the object in the video as the video-related information. The object operation information may be, for example, information about the speed of the object in the video, information about the acceleration of the object in the video, or information about the moving distance of the object in the video.

Next, the importance level setting unit 41 of the observation device 2 sets the importance level for the video based on the video-related information detected in step S21 (step S22). Specifically, for example, the importance level setting unit 41 may raise the importance level for the video to be captured in a state in which the information detection unit 40 detects some abnormality at the site based on the sensing result by the sensor installed at the site and/or in a state in which the acceleration of the motion of the object in the video is detected to be large, and may lower the importance level for the video to be captured in a case where these states are restored.

Examples of the sensor include light detection and ranging (LiDAR), an acoustic sensor, an audio sensor, an acceleration sensor, a gas sensor, a humidity sensor, an optical sensor, a vibration sensor, a proximity sensor, a pressure sensor, a magnetic sensor, an infrared sensor, and a metal detector. However, the sensor is not limited to these specific examples.

In a case where the sensor is LiDAR, the information detection unit 40 may acquire a sensing result by LiDAR and detect a distance to a monitoring target such as an object as the video-related information based on the sensing result, and the importance level setting unit 41 may set the importance level for the video in accordance with the detected distance. In this case, the importance level setting unit 41 may set the importance level higher as urgency corresponding to the distance is higher (for example, as the distance to the monitoring target is shorter). As a result, the computer 1 can cause the terminal 3 to preferentially output the video of an area having a high urgency level based on the importance level provided from the observation device 2. A hierarchy of the importance levels (for example, five levels) may be defined in advance in association with the distance.

In a case where the sensor is an acoustic sensor, the information detection unit 40 may acquire a sensing result by the acoustic sensor and detect a magnitude of sound pressure as the video-related information based on the sensing result, and the importance level setting unit 41 may set the importance level for the video in accordance with the detected magnitude of sound pressure. In this case, the importance level setting unit 41 may set the importance level higher as urgency correlated with the magnitude of sound pressure is higher (for example, as the magnitude of sound pressure is greater). As a result, the computer 1 can cause the terminal 3 to preferentially output the video of an area having a high urgency level based on the importance level provided from the observation device 2. A hierarchy of the importance levels (for example, five levels) may be defined in advance in association with the magnitude of sound pressure.

In a case where the sensor is an audio sensor, the information detection unit 40 may acquire a sensing result by the audio sensor and detect characteristics of audio such as a magnitude of audio and a frequency of audio as the video-related information based on the sensing result, and the importance level setting unit 41 may set the importance level for the video in accordance with the detected characteristics of audio. In this case, the importance level setting unit 41 may set the importance level higher as the urgency correlated with the characteristics of the audio is higher (for example, as the sound pressure of the audio is greater). As a result, the computer 1 can cause the terminal 3 to preferentially output the video of an area having a high urgency level based on the importance level provided from the observation device 2. A hierarchy of the importance levels (for example, five levels) may be defined in advance in association with the characteristics of the audio.

In a case where the sensor is an acceleration sensor, the information detection unit 40 may acquire a sensing result by the acceleration sensor and detect an acceleration of an object as the video-related information based on the sensing result, and the importance level setting unit 41 may set the importance level for the video in accordance with the detected acceleration of the object. In this case, the importance level setting unit 41 may set the importance level higher as a degree of abnormality correlated with the acceleration is larger (for example, as the acceleration is larger). As a result, the computer 1 can cause the terminal 3 to preferentially output the video of an area having a high degree of abnormality based on the importance level provided from the observation device 2. A hierarchy of the importance levels (for example, five levels) may be defined in advance in association with the magnitude of acceleration. The abnormality correlated with the acceleration may be, for example, an abnormality caused by vibration of an object, or may be another abnormality.

In a case where the sensor is a gas sensor, the information detection unit 40 may acquire a sensing result by the gas sensor and detect a gas concentration as the video-related information based on the sensing result, and the importance level setting unit 41 may set the importance level for the video in accordance with the detected gas concentration. In this case, the importance level setting unit 41 may set the importance level higher as a degree of deterioration of a site environment correlated with the gas concentration is greater (for example, as the gas concentration is higher). As a result, the computer 1 can cause the terminal 3 to preferentially output the video of an area having a high degree of deterioration of the site environment based on the importance level provided from the observation device 2. A hierarchy of the importance levels (for example, five levels) may be defined in advance in association with the magnitude of gas concentration.

In a case where the sensor is a humidity sensor, the information detection unit 40 may acquire a sensing result by the humidity sensor and detect a humidity as the video-related information based on the sensing result, and the importance level setting unit 41 may set the importance level for the video in accordance with the detected humidity. In this case, the importance level setting unit 41 may set the importance level for the video higher as a degree of decrease in operation efficiency of a device correlated with the humidity is greater (for example, as the humidity is higher). As a result, the computer 1 can cause the terminal 3 to preferentially output the video of an area having a high degree of decrease in operation efficiency of the device based on the importance level provided from the observation device 2. A hierarchy of the importance levels (for example, five levels) may be defined in advance in association with a magnitude of the humidity.

In a case where the sensor is an optical sensor, the information detection unit 40 may acquire a sensing result by the optical sensor and detect a light amount as the video-related information based on the sensing result, and the importance level setting unit 41 may set the importance level for the video in accordance with the detected light amount. In this case, the importance level setting unit 41 may set the importance level for the video higher as a degree of decrease in visibility correlated with the light amount is greater (for example, as the light amount is lower). As a result, the computer 1 can cause the terminal 3 to preferentially output the video of an area where the degree of decrease in visibility is high and work efficiency tends to decrease based on the importance level provided from the observation device 2. A hierarchy of the importance levels (for example, five levels) may be defined in advance in association with a magnitude of the light amount.

In a case where the sensor is a vibration sensor, the information detection unit 40 may acquire a sensing result by the vibration sensor and detect vibration as the video-related information based on the sensing result, and the importance level setting unit 41 may set the importance level for the video in accordance with the detected vibration. In this case, the importance level setting unit 41 may set the importance level for the video higher as a degree of abnormality of an object such as a structure or a device at the site is higher, the abnormality being correlated with the characteristics of the vibration. As a result, the computer 1 can cause the terminal 3 to preferentially output a video of an area having a high degree of abnormality of an object such as a structure or a device based on the importance level provided from the observation device 2, and the user can find the abnormality at an early stage. A hierarchy of the importance levels (for example, five levels) may be defined in advance in association with the characteristics of the vibration.

In a case where the sensor is a proximity sensor, the information detection unit 40 may acquire a sensing result by the proximity sensor and detect a distance to a monitoring target such as an object as the video-related information based on the sensing result, and the importance level setting unit 41 may set the importance level for the video in accordance with the detected distance. In this case, the importance level setting unit 41 may set the importance level higher as urgency corresponding to the distance is higher (for example, as the distance to the monitoring target is shorter). As a result, the computer 1 can cause the terminal 3 to preferentially output the video of an area having a high urgency level based on the importance level provided from the observation device 2. A hierarchy of the importance levels (for example, five levels) may be defined in advance in association with the distance.

In a case where the sensor is a pressure sensor, the information detection unit 40 may acquire a sensing result by the pressure sensor and detect pressure as the video-related information based on the sensing result, and the importance level setting unit 41 may set the importance level for the video in accordance with the detected pressure. In this case, the importance level setting unit 41 may set the importance level higher as a degree of abnormality of a load correlated with a magnitude of the pressure is greater (for example, as the pressure is higher). As a result, the computer 1 can cause the terminal 3 to preferentially output the video of an area having a high load applied to a machine such as a work machine based on the importance level provided from the observation device 2. A hierarchy of the importance levels (for example, five levels) may be defined in advance in association with the magnitude of the pressure.

In a case where the sensor is a magnetic sensor, the information detection unit 40 may acquire a sensing result by the magnetic sensor and detect a magnetic field change as the video-related information based on the sensing result, and the importance level setting unit 41 may set the importance level for the video in accordance with the detected magnetic field change. In this case, the importance level setting unit 41 may set the importance level higher as a degree of abnormality of a metal object correlated with the magnetic field change is greater. As a result, the computer 1 can cause the terminal 3 to preferentially output the video of an area where an abnormal metal object exists at the site based on the importance level provided from the observation device 2. A hierarchy of the importance levels (for example, five levels) may be defined in advance in association with the magnetic field change.

In a case where the sensor is an infrared sensor, the information detection unit 40 may acquire a sensing result by the infrared sensor and detect an amount of heat radiation as the video-related information based on the sensing result, and the importance level setting unit 41 may set the importance level for the video in accordance with the detected amount of heat radiation. In this case, the importance level setting unit 41 may set the importance level higher as a degree of risk of an overheated portion correlated with the amount of heat radiation is greater. As a result, the computer 1 can cause the terminal 3 to preferentially output the video of an area where the overheated portion exists at the site based on the importance level provided from the observation device 2. A hierarchy of the importance levels (for example, five levels) may be defined in advance in association with the amount of heat radiation.

In a case where the sensor is a metal detector, the information detection unit 40 may acquire a sensing result by the metal detector and detect characteristics of metal such as a type and a size of the metal object as the video-related information based on the sensing result, and the importance level setting unit 41 may set the importance level for the video in accordance with the detected characteristics of the metal. In this case, the importance level setting unit 41 may set the importance level higher as a degree of the risk correlated with the characteristics of the metal object is greater. As a result, the computer 1 can cause the terminal 3 to preferentially output the video of an area where a dangerous material exists at the site based on the importance level provided from the observation device 2. A hierarchy of the importance levels (for example, five levels) may be defined in advance in association with the characteristics of the metal object.

In a case where the detection in step S21 is detection based on the learned model for information detection, the information detection unit 40 is configured to input a video captured by the observation device 2 (for example, an image included in a video captured by the observation device 2) to the learned model for information detection and acquire the determination result (for example, the type of object in the video) from the learned model for information detection, but the configuration is not limited to such a specific example. For example, the information detection unit 40 may be configured to input a sensing result by the sensor to the learned model for information detection and acquire a determination result from the learned model for information detection. In this case, the determination result may be a determination result related to the presence or absence of an abnormality (degree of abnormality) having a correlation with the sensing result by the sensor. Specific examples as described later can be given as the sensor. The sensing results by sensors related to sound, such as the acoustic sensor and the audio sensor, have a correlation with the presence or absence of abnormality related to sound. The sensing result by the acceleration sensor has a correlation with the presence or absence of abnormality in acceleration or speed. The sensing result by the gas sensor has a correlation with the presence or absence of abnormality in the gas concentration. The sensing result by the humidity sensor has a correlation with the presence or absence of abnormality in the humidity. The sensing result by the optical sensor has a correlation with the presence or absence of abnormality in the light amount. The sensing result by the vibration sensor has a correlation with the presence or absence of abnormality in the vibration. The sensing result by the proximity sensor has a correlation with the presence or absence of abnormality in the distance to the monitoring target. The sensing result by the pressure sensor has a correlation with the presence or absence of abnormality in the pressure. The sensing result by the magnetic sensor has a correlation with the presence or absence of abnormality in the magnetic field change. The sensing result by the infrared sensor has a correlation with the presence or absence of abnormality in the distance to the monitoring target. The sensing result by the metal detector has a correlation with the presence or absence of abnormality in the characteristics (degree of risk) of the metal.

The information detection unit 40 may be configured to input a video captured by the observation device 2 and/or a sensing result by the sensor to the learned model for information detection, and acquire the determination result (for example, the determination result of the type of the object in the image or the determination result of the presence or absence of abnormality) from the learned model for information detection. The information detection unit 40 may be configured to input a video captured by the observation device 2 and/or a sensing result by the sensor to the learned model for information detection, and acquire the importance level from the learned model for information detection as a determination result. This importance level has a correlation with, for example, the presence or absence of abnormality, and when there is abnormality as described above, the importance level is high. In this case, the learning device may acquire a training data set including teacher data (for example, a sensing result) and a correct answer label (for example, presence or absence of abnormality), input the teacher data to a learning target model, acquire a processing result from the learning target model, and train the learning target model based on an error between the correct answer label and the processing result in accordance with a learning algorithm.

Next, the importance level provision unit 50 of the observation device 2 provides the set importance level to the computer 1 (step S23). Specifically, in order to cause the computer 1 to set the display rank for the video to be displayed on the terminal 3, the importance level provision unit 50 transmits the set importance level to the computer 1 via the network, and provides the computer 1 with the importance level.

Next, the instruction reception unit 51 of the observation device 2 receives an instruction from the computer 1 (step S24). Specifically, the instruction reception unit 51 receives, from the computer 1, an instruction to increase the image quality for a video whose display rank is set high and to decrease the image quality for a video whose display rank is set low. That is, the instruction reception unit 51 receives, from the computer 1, an instruction that the image quality for the video set with a high display rank is set to a high image quality in the observation device 2, and the image quality for the video set with a low display rank is set to a low image quality in the observation device 2.

Next, the image quality setting unit 42 of the observation device 2 sets the image quality for the video to be captured based on the received instruction (step S25). Specifically, the image quality setting unit 42 increases or decreases the image quality for the video to be captured based on the received instruction. The image quality may include resolution and/or a frame rate, and the instruction unit 21 of the computer 1 may send an instruction to increase or decrease the resolution and/or the frame rate of the video to the observation device 2. A specific form of the image quality such as the number of stages of the resolution and the number of stages of the frame rate is not limited.

The acceleration detection unit 43 of the observation device 2 detects the acceleration of the observation device 2. Examples of the acceleration detection unit 43 include a gyro sensor and an acceleration sensor. In step S25, in a case where the acceleration of the observation device 2 itself detected by the acceleration detection unit 43 of the observation device 2 is large, for example, the image quality setting unit 42 may set the image quality for the video to be captured to be low without following the instruction from the computer 1. Specifically, in a case where the acceleration of the observation device 2 is equal to or larger than a predetermined threshold value, the image quality setting unit 42 may lower the image quality for the video to a predetermined value, or may lower the image quality for the video by a predetermined degree. The image quality setting unit 42 may set the image quality for the video to be lower as the acceleration of the observation device 2 is larger. The image quality setting unit 42 may control the image quality based on a change in parameters such as the luminance and contrast of the video.

Next, the video provision unit 52 of the observation device 2 provides the video having the set image quality to the computer 1 (step S26). Specifically, the video provision unit 52 provides the video having the image quality set in step S25 described above to the video channel 4 of the computer 1. At this time, the video provision unit 52 provides the video having the set image quality to the port 5 set in accordance with the display rank. In a case where the observation device 2 generates a signal for setting parameters such as the luminance and contrast low in step S25 described above, the video provision unit 52 also provides this signal to the computer 1.

The above is the video distribution processing.

In the observation device 2 according to the present embodiment, for example, in a case where a sensor or the like installed at the site detects an abnormality or detects that the acceleration of the motion in the video is large, it is possible to raise the importance level for a video of a monitoring target at the place, facility, or the like associated with the abnormality and/or the video in which the motion is fast. As a result, the observation device 2 is instructed by the computer 1 to set a video having high importance level to a high image quality and a video having low importance level to a low image quality, and as a result, the computer 1 can control the amount of transmitted data from a large number of observation devices 2 distributed on the site. Therefore, under an environment where the amount of transmitted data that can be used for the videos is limited, even with a minimum necessary infrastructure, it is possible to suppress the occurrence of problems such as video delay and video quality degradation, and it is possible to smoothly switch between the videos automatically by the computer 1 or manually by the user in accordance with the importance levels for the videos.

In a case where the observation device 2 is, for example, an unmanned aerial vehicle such as a drone, an operation (a motion such as a constant velocity motion) of the unmanned aerial vehicle is remotely controlled, and an object to be captured by the unmanned aerial vehicle is, for example, a work machine at a work site and its periphery, the unmanned aerial vehicle can capture an overhead video of the work machine and its periphery. That is, the unmanned aerial vehicle can capture a video of the work machine itself, a video of an area in front of the work machine, a video of an area behind the work machine, a video of an area to the right of the work machine, and a video of an area to the left of the work machine. In this case, the image quality setting unit 42 may detect the operation of the work machine included in the overhead video, and set the image quality for the video based on the operation of the work machine (for example, based on the speed and/or acceleration of the work machine). The image quality setting unit 42 may detect an operation of a moving body included in the overhead video, specifically, a moving body existing in an area in a front of, behind, to the right of, or to the left of the work machine, for example, and set the image quality for the video based on the operation of the moving body (for example, based on the speed and/or acceleration of the moving body). For example, the image quality setting unit 42 may detect the operation of at least one of the work machine and the moving body from the overhead video, and control the image quality based on difference information of an optical flow based on the acceleration and/or the speed of the operation. For example, the image quality setting unit 42 may set the importance level higher as the speed and/or acceleration of the work machine is higher. Similarly, the image quality setting unit 42 may set the importance level higher as the speed and/or acceleration of the moving body is higher. This setting improves safety in remote operation. The image quality setting unit 42 may control the image quality based on a change in parameters such as the luminance and contrast in the overhead video.

In a case where the observation device 2 is, for example, an imaging device such as a camera fixedly installed at a predetermined place at the site, and an object to be captured by the camera is, for example, a work machine at the work site and its periphery, the imaging device can capture an area corresponding to the installation place. For example, the imaging device preferably captures a video of at least one of an area behind the work machine, an area to the right of the work machine, and an area to the left of the work machine. In general, the user tends to easily gaze at the area in front of the work machine, whereas the user tends not to gaze at the areas behind, to the right of, and to the left of the work machine. The image quality setting unit 42 may detect the operation of the work machine included in the video, and set the image quality for the video based on the operation of the work machine (for example, based on the speed and/or acceleration of the work machine). The image quality setting unit 42 may detect an operation of a moving body included in the video, specifically, a moving body existing behind, to the right of, or to the left of the work machine, for example, and set the image quality for the video based on the operation of the moving body (for example, based on the speed and/or acceleration of the moving body). For example, the image quality setting unit 42 may detect the operation of at least one of the work machine and the moving body from the overhead video, and control the image quality based on difference information of an optical flow based on the acceleration and/or the speed of the operation. For example, the image quality setting unit 42 may set the importance level higher as the speed and/or acceleration of the work machine is higher. Similarly, the image quality setting unit 42 may set the importance level higher as the speed and/or acceleration of the moving body is higher. This setting improves safety in remote operation. The image quality setting unit 42 may control the image quality based on a change in parameters such as the luminance and contrast in the overhead video.

In the observation device 2 according to the present embodiment, it is possible to control the amount of transmitted data by lowering the image quality for the video captured in a state where the observation device 2 itself is in an unstable motion. Therefore, under an environment where the amount of transmitted data that can be used for the videos is limited, even with a minimum necessary infrastructure, it is possible to suppress the occurrence of problems such as video delay and video quality degradation, and it is possible to smoothly switch between the videos automatically by the computer 1 or manually by the user in accordance with the importance levels for the videos.

Furthermore, in the observation device 2 according to the present embodiment, since the importance level for the video captured by the observation device can be set by performing learning for the information that affects the setting of the importance level from a past video by the artificial intelligence (AI), it is possible to automatically raise and lower the importance level and further appropriately switch the video to be displayed in accordance with the content of the video to be captured.

The above-described means and functions are implemented by the computer 1 including a CPU, a memory, various devices, and the like, the computer 1 reading and executing a predetermined program. The program may be provided, for example, in a form of a cloud service provided from a single or a plurality of devices via a network, specifically, in a form of a SaaS (software as a service), for example. The program may be provided in a form recorded on a computer-readable recording medium, for example. In this case, the computer reads the program from the recording medium, transfers the program to an internal recording device or an external recording device, records the program, and executes the program. The program may be configured to be recorded in advance in a non-transitory recording device (non-transitory recording medium) such as a magnetic disk, an optical disk, or a magneto-optical disk, and provided from the recording device to the terminal via a communication line.

Specifically, the program according to the present embodiment is a program that is readable by the computer 1, and causes the computer to execute the steps of receiving importance levels for videos, setting display ranks for the videos based on the received importance levels, sending instructions to the observation devices 2 corresponding respectively to the videos such that image quality for the videos is set based on the display ranks, acquiring the videos having the image quality set by the observation devices 2 from the observation devices 2, and causing the terminal 3 to output the acquired videos in accordance with the display ranks.

Although the embodiment of the present invention has been described above, the present invention is not limited to the above embodiment. Effects described in the embodiment of the present invention merely recite the most suitable effects resulting from the present invention, and the effects of the present invention are not limited to those described in the embodiment of the present invention.

### [Summary of Embodiment]

A video switching computer 1 having a first feature is a computer 1 for switching between videos from a plurality of distributed observation devices 2. This video switching computer 1 includes an importance level reception unit that receives importance levels for the videos, a display rank setting unit that sets display ranks for the videos based on the received importance levels, an instruction unit that sends instructions to the observation devices 2 corresponding respectively to the videos such that image quality for the videos is set based on the display ranks, an acquisition unit that acquires, from the observation devices 2, the videos having the image quality set by the observation devices 2, and an output unit that causes a terminal 3 to output the acquired videos in accordance with the display ranks.

In the video switching computer 1 having the first feature, it is possible to control the amount of transmitted data from the plurality of observation devices 2 distributed on the site by sending instructions to the observation devices 2 to set a high image quality for a video having a high importance level and to set a low image quality for a video having a low importance level. Therefore, under an environment where the amount of transmitted data that can be used for the videos is limited, even with a minimum necessary infrastructure, it is possible to suppress the occurrence of problems such as video delay and video quality degradation, and it is possible to smoothly switch between the videos automatically by the computer 1 or manually by the user in accordance with the importance levels for the videos.

In the video switching computer 1 having a second feature, the output unit preferably causes the terminal 3 to output the video having the highest display rank in an enlarged manner.

In the video switching computer 1 having the second feature, since the video having the highest display rank is displayed in a large size, the user can monitor in detail the place and/or the machine that the video of the most interest shows even in the minimum necessary infrastructure under an environment where the amount of transmitted data that can be used for the videos is limited.

In the video switching computer 1 having a third feature, the display rank setting unit preferably sets the display rank to cause the terminal 3 to output, in the vicinity of the video having the highest display rank, a video associated with the video having the highest display rank.

In the video switching computer 1 having the third feature, since the video having the highest display rank is displayed together with the video associated with the video, the user can monitor in detail the place and/or the machine that the video having the highest importance level shows even in the minimum necessary infrastructure under an environment where the amount of transmitted data that can be used for the videos is limited. The video associated with the video having the highest display rank may be, for example, a video showing the same place as the place where the video having the highest display rank shows, or may be a video showing the same machine as the machine that the video having the highest display rank shows.

In the video switching computer 1 having a fourth feature, the display rank setting unit preferably raise a display rank for a video from an observation device 2 positioned near the observation device 2 that captures the video having the highest display rank.

In the video switching computer 1 having the fourth feature, a video that shows a machine and/or a place close to a machine and/or a place having a high attention level can be displayed. Therefore, the user can simultaneously monitor the environment near the machine and/or the place of interest.

The video switching computer 1 having a fifth feature preferably further includes a video storage unit that stores a video based on the importance level.

In the video switching computer 1 having the fifth feature, for example, a video having a high importance level is stored in the video storage unit and output of the video is on standby, and thus, the video can be switched without delay automatically by the computer 1 or manually and smoothly by the user even at a site with a poor communication environment. The computer 1 as a server stores the video having a high importance level, and thus, the computer 1 can search for a video of an imaging target.

In the fifth feature, the video storage unit may store the video, for example, in the video switching computer 1 such as a server, in a standby state that is a state in which the stored video can be instantaneously displayed on the terminal 3 as necessary.

In the video switching computer 1 having a sixth feature, the output unit preferably causes the terminal 3 to output the stored video in accordance with the display rank.

In the video switching computer 1 having the sixth feature, in a case where the display rank for the stored video is raised, the video whose output is on standby can be immediately accessed and output. Therefore, even at a site with a poor communication environment, the video can be switched by the computer 1 automatically or manually by a user and smoothly without delay.

In the video switching computer 1 having a seventh feature, the importance level reception unit preferably receives an input of the importance level from a user.

In the video switching computer 1 having the seventh feature, the user of the computer 1 or the user of the terminal 3 can set the importance level for the video in a case where the user wants to switch the video displayed on the terminal 3 to another video, and thus, it is possible to switch the video to be displayed as appropriate by raising or lowering the importance level for the video showing the monitoring target such as the machine operated by the user or the site monitored by the user.

In the video switching computer 1 having an eighth feature, the instruction unit preferably sends an instruction to the observation device 2 to increase or decrease the image quality by increasing or decreasing a resolution of the video.

In the video switching computer 1 having the eighth feature, by instructing to increase the resolution of a video having a high importance level, a video whose details are important is clearly distributed, and by instructing to decrease the resolution of a video having a low importance level, even in a low-speed network environment or a device with limited processing capability, these videos can be smoothly distributed, and the user can view these videos.

In the video switching computer 1 having a ninth feature, the instruction unit preferably sends an instruction to the observation device 2 to increase or decrease the image quality by increasing or decreasing a frame rate of the video.

In the video switching computer 1 having the ninth feature, by increasing the frame rate of a video having a high importance level, a video with a lot of fast motion can be distributed, and by decreasing the frame rate of a video having a low importance level, the data size of the video can be suppressed. Therefore, even in a low-speed or an unstable network environment due to movement or the like, these videos can be distributed, and the user can view these videos.

An observation device 2 having a tenth feature is configured to be communicably connected to the video switching computer 1. This observation device 2 includes an information detection unit that detects information related to a video captured by the observation device, an importance level setting unit that sets an importance level for the video based on the detected information, an importance level provision unit that provides the set importance level to the computer 1, an instruction reception unit that receives the instruction from the computer 1, an image quality setting unit that sets image quality for a video to be captured based on the received instruction, and a video provision unit that provides the video having the set image quality to the video switching computer 1.

In the invention according to the tenth feature, for example, in a case where a sensor or the like installed at the site detects an abnormality or detects that the acceleration of the motion in the video is large, it is possible to raise the display rank for a video of a monitoring target, such as the place, facility, or the like, associated with the abnormality and/or the video in which the motion is fast. Then, the amount of transmitted data from the plurality of observation devices 2 distributed on the site is controlled by the observation device 2 being instructed from the computer 1 to set a high image quality for a video having a high importance level and to set a low image quality for a video having a low importance level. Therefore, under an environment where the amount of transmitted data that can be used for the videos is limited, even with a minimum necessary infrastructure, it is possible to suppress the occurrence of problems such as video delay and video quality degradation, and it is possible to smoothly switch between the videos automatically by the computer 1 or manually by the user in accordance with the importance levels for the videos.

The observation device having an eleventh feature preferably further includes an acceleration detection unit that detects acceleration of the observation device 2, in which the image quality setting unit sets the image quality for the video to be captured to a low image quality when the detected acceleration is large.

In the observation device 2 having the eleventh feature, it is possible to control the amount of transmitted data by lowering the image quality for the video captured in a case where the observation device 2 itself is in an unstable motion. Therefore, under an environment where the amount of transmitted data that can be used for the videos is limited, even with a minimum necessary infrastructure, it is possible to suppress the occurrence of problems such as video delay and video quality degradation, and it is possible to smoothly switch between the videos automatically by the computer 1 or manually by the user in accordance with the importance levels for the videos.

In the observation device 2 having a twelfth feature, the information detection unit preferably detects the information based on a learned model.

In the invention according to the observation device 2 having the twelfth feature, since the importance level for the video captured by the observation device 2 can be set by performing learning for the information that affects the setting of the importance level from a past video by the artificial intelligence (AI), it is possible to automatically raise and lower the importance level and further appropriately switch the video to be displayed in accordance with the content of the video to be captured.

An embodiment having the first to twelfth features described above belongs to a category of a computer, an observation device, a method, or a program, but similar operations and effects according to the category are exhibited in other categories such as a system to be described later.

As described above, the embodiment can provide the video switching computer 1, the observation device 2, the video switching method, and the program capable of smoothly switching the video display without delay while minimizing the amount of transmitted data from the cameras distributed on the site even with the minimum necessary infrastructure under the environment where the amount of transmitted data that can be used for the videos is limited. The present invention further includes a following video switching system.

A video switching system includes
a plurality of observation devices 2 disposed in a distributed manner in an observation target region such as a site, and
a video switching computer 1,
the video switching computer 1 including
an importance level reception unit 20 that receives importance levels for videos to be captured by the plurality of observation devices 2,
a display rank setting unit 10 that sets display ranks for the videos to be captured by the plurality of observation devices 2 based on the received importance levels,
an instruction unit 21 that sends, to the observation devices 2 that are to capture the respective videos, instructions to set image quality for the respective videos based on the importance levels or the display ranks,
an acquisition unit 22 that acquires, from the plurality of observation devices 2, the videos having the image quality set by the plurality of observation devices 2,
an output unit 23 (display output unit 23) that causes a terminal 3 to output the acquired videos in accordance with the display ranks.

In the video switching system, the video switching computer 1 sends, to the observation devices 2, instructions such that a video having a high importance level is set to a high image quality and a video having a low importance level is set to a low image quality. Therefore, the video switching system can control the amount of transmission of data transmitted from the plurality of observation devices 2 disposed in a distributed manner at the site such as a work site to the video switching computer 1. As a result, the computer 1 can cause the terminal 3 to output the videos acquired from the plurality of observation devices 2 with the image quality according to the importance levels even in an environment where the amount of transmitted data that can be used for the videos is limited.

The video switching system may include the terminal 3 as an element, but the terminal 3 is not an essential element in the video switching system.

The present invention is not limited to the embodiment described above. The present invention includes, for example, the following modifications.

### [Modification 1]

In the video switching system according to the embodiment illustrated in FIGS. 1, 4, and 5, the site where the observation devices 2 are disposed is a work site where a work machine 60 such as an excavator, a crane, or a bulldozer performs work, but the present invention is not limited to the above embodiment. The site where the observation devices 2 are disposed may be, for example, a manufacturing site. In this case, a manufacturing line for manufacturing a product from raw materials is disposed at the manufacturing site. In this manufacturing line, a plurality of processes for producing a product from raw materials are performed. The plurality of observation devices 2 is disposed at the manufacturing site in order to image situations of the plurality of processes.

Specifically, for example, the manufacturing line includes a first process, a second process, and a third process, and the plurality of observation devices 2 include a first observation device 2 for imaging a situation of the first process, a second observation device 2 for imaging a situation of the second process, and a third observation device 2 for imaging a situation of the third process.

In Modification 1, since the configurations of the computer 1, the plurality of observation devices 2, and the terminal 3 are similar to the configurations of the computer 1, the plurality of observation devices 2, and the terminal 3 in the embodiment described with reference to FIGS. 1 to 7, detailed description thereof will be omitted.

In Modification 1, as in the embodiment, the computer 1 is configured to switch between videos from the plurality of observation devices 2 disposed in a distributed manner at the manufacturing site. This computer 1 includes an importance level reception unit 20 that receives importance levels for videos, a display rank setting unit 10 that sets display ranks for the videos based on the received importance levels, an instruction unit 21 that sends instructions to the observation devices 2 corresponding respectively to the videos such that image quality for the videos is set based on the display ranks, an acquisition unit 22 that acquires, from the observation devices 2, the videos having the image quality set by the observation devices 2, and a display output unit 23 that causes the terminal 3 to output the acquired videos in accordance with the display ranks.

In Modification 1, the computer 1 performs arithmetic processing illustrated in FIG. 3 and arithmetic processing illustrated in FIG. 6. In Modification 1, the observation device 2 may perform arithmetic processing illustrated in FIG. 7. In Modification 1, the terminal 3 performs display as illustrated in FIGS. 1, 4, and/or 5, for example, based on an instruction from the computer 1.

The site where the observation devices 2 are disposed may be, for example, a site where it is necessary to monitor and maintain infrastructure facilities such as a plant and a power plant.

### [Modification 2]

In the video switching system according to Modification 2, the computer 1 performs processing for switching at least one of the image quality and the size of the video that is output on the terminal 3 in accordance with at least one of a specific operation and a specific video.

A case will be described where the site where the observation devices 2 are disposed is a work site, and the work machine 60 such as an excavator, a crane, or a bulldozer is disposed at the work site.

The work machine 60 illustrated in FIG. 1 is, for example, an excavator. The work machine 60 includes a self-propelled lower travelling body 61, an upper slewing body 62 slewably supported by the lower travelling body 61, and a work device 63 supported by the upper slewing body 62. In the specific example illustrated in FIG. 1, the lower travelling body 61 includes a crawler type travelling device, but the travelling device may be a device including a tire. The work device 63 includes, for example, a boom rotatably supported by the upper slewing body 62, an arm rotatably supported by a distal end of the boom, and a bucket rotatably supported by a distal end of the arm.

The work machine 60 includes an orientation detector 64 for detecting an orientation of the work machine 60. The orientation detector 64 may include a boom orientation detector for detecting an orientation of the boom, an arm orientation detector for detecting an orientation of the arm, and a bucket orientation detector for detecting an orientation of the bucket. The orientation detector 64 may further include a slewing body orientation detector for detecting an orientation of the upper slewing body 62 with respect to the lower travelling body 61. The orientation detector 64 may further include an orientation detector that detects a degree of inclination of the work machine 60 with respect to a horizontal plane.

The video switching system according to Modification 2 includes a remote operation device. The remote operation device includes a terminal 3 including a display device as illustrated in FIGS. 1, 4, and 5, and a remote operation unit 65 for remotely operating the work machine 60. The remote operation unit 65 includes a plurality of remote operation levers for moving the work device 63 of the work machine 60 and slewing the upper slewing body 62. The remote operation unit 65 includes at least one of an operation lever and an operation pedal (not illustrated) for causing the lower travelling body 61 of the work machine 60 to travel. The user can remotely operate the work machine 60 disposed at the work site by operating the remote operation unit 65 of the remote operation device while viewing the screen of the display device of the terminal 3.

The computer 1 according to Modification 2 may perform processing for automatically switching at least one of the image quality and the size of the video that is output on the terminal 3 in accordance with a specific operation of the work machine 60. The computer 1 stores the specific operation in advance. The user performs an input for designating the specific operation on the input unit of the terminal 3 illustrated in FIG. 2, and the computer 1 sets the operation corresponding to the input as the specific operation.

The specific operation may be, for example, at least one of the operation of the work device 63 and the operation of the upper slewing body 62. Specifically, the specific operation may be a travelling operation of the work machine 60 in a predetermined direction, may be a travelling operation in which the work machine 60 ascends an upward slope, or may be a travelling operation in which the work machine 60 descends a downward slope. The specific operation may be an operation of the boom, an operation of the arm, an operation of the bucket, or a slewing operation of the upper slewing body 62. The specific operation may be an operation in which a travelling speed of the work machine 60 is equal to or greater than a predetermined threshold value, an operation in which an operation speed (rotating speed) of the boom, the arm, or the bucket of the work device 63 is equal to or greater than a predetermined threshold value, or an operation in which a slewing speed of the upper slewing body 62 is equal to or greater than a predetermined threshold value.

The computer 1 or a controller of the work machine 60 can determine whether the specific operation has been performed based on a detection result input from an operation detection device for determining the specific operation. The operation detection device may be, for example, the orientation detector 64, the observation device 2, the remote operation unit 65, or other devices. In a case where the operation detection device is the observation device 2, the computer 1 or the controller of the work machine 60 may determine whether the specific operation has been performed by performing image recognition on a video acquired from the observation device 2. In a case where the operation detection device is the orientation detector 64, the computer 1 or the controller of the work machine 60 can determine whether the specific operation has been performed based on a detection result by the orientation detector 64. In a case where the operation detection device is the remote operation unit 65, the computer 1 or a controller of the work machine 60 can determine whether the specific operation has been performed based on an amount of a lever operation applied to the remote operation unit 65.

In a case where the specific operation has been performed, the computer 1 may perform processing for automatically switching at least one of the image quality and the size of the video that is output on the terminal 3. Specifically, in a case where the specific operation has been performed, the computer 1 may send an instruction to the terminal 3 to increase the size of the video related to the specific operation on the terminal 3 as compared to before the specific operation is performed, and the terminal 3 may enlarge the size of the video related to the specific operation in the display device of the terminal 3 in accordance with the instruction as compared to before the specific operation is performed.

In a case where the specific operation has been performed, the computer 1 may send, to the observation device 2 that captures the video, an instruction to increase the image quality for the video related to the specific operation as compared to before the specific operation is performed, the observation device 2 may set the image quality for the video to be higher than before the specific operation is performed in accordance with the instruction, and may provide the computer 1 with the video having the set image quality, and the computer 1 may cause the terminal 3 to output the video.

The computer 1 may perform processing for switching at least one of the image quality and the size of the video that is output on the terminal 3 in accordance with the specific video. The computer 1 stores the specific video in advance. The specific video may be, for example, a video whose contrast is equal to or less than a predetermined threshold value, or a video whose resolution is equal to or less than a predetermined threshold value. The user performs an input for designating the predetermined threshold value on the input unit of the terminal 3 illustrated in FIG. 2, and the computer 1 sets a value corresponding to the input as the predetermined threshold value. The computer 1 or the controller of the terminal 3 can acquire the contrast of the video displayed on the terminal 3.

In a case where the specific video is displayed on the terminal 3, the computer 1 may perform processing for automatically switching at least one of the image quality and the size of the video that is output on the terminal 3. Specifically, in a case where the specific video is displayed on the terminal 3, the computer 1 may send an instruction to the terminal 3 to increase the size of the video on the terminal 3 as compared to before the specific video is displayed, and the terminal 3 may enlarge the size of the specific video on the display device of the terminal 3 in accordance with the instruction as compared to before the specific video is displayed.

In a case where the specific video is displayed on the terminal 3, the computer 1 may send an instruction to the terminal 3 to increase the contrast of the video as compared to before the specific video is displayed, and the terminal 3 may increase the contrast of the specific video in accordance with the instruction as compared to before the specific video is displayed.

### [Modification 3]

The video switching system according to Modification 3 has the following preset function. The computer 1 is configured to be able to save video display setting associated with a specific identification condition.

The item of the video display setting may include, for example, a setting item for the number of videos to be displayed on the terminal 3, a setting item for the size of the video to be displayed on the terminal 3, and a setting item for a display position of the video on the terminal 3.

The specific identification condition may be, for example, a condition related to an identifier (identification information) for identifying a user, or may be a condition related to an identifier (identification information) for identifying a target object such as a work machine, a manufacturing device, or a facility disposed at a site. The specific identification condition may be, for example, a condition related to an operation speed of a remote operation target such as the work machine 60 or a condition related to a feature of a video. The specific identification condition may be a condition related to a content of an operation performed on the site. The content of the operation may include, for example, an operation of a work machine, such as an excavation operation and a backward operation at the work site, and may include an operation of a vehicle, such as a carrying operation and a backward operation at the manufacturing site. The specific identification condition may be a condition related to weather, a condition related to a time zone, or a condition related to a quality for a communication environment.

The user performs an input for designating the specific identification condition and the video display setting associated with the specific identification condition on the input unit of the terminal 3 illustrated in FIG. 2, and the computer 1 saves the specific identification condition and the video display setting in association with each other based on the input. In a case where the specific identification condition is satisfied, the computer 1 causes the terminal 3 to output a video with the video display setting associated with the identification condition. Therefore, the computer 1 can cause the terminal 3 to display the video in a display mode suitable for the specific identification condition such as user's preference and the type of the work machine 60.

### [Modification 4]

In the above embodiment, a case where the observation devices 2 are disposed at the work site has been mainly described. However, the environment where the amount of transmitted data is limited may be, for example, a closed space such as an underground space, a tunnel, or a factory, a domestic or foreign region where a communication infrastructure is not sufficiently prepared, an outer space, or a region where communication is congested. The environment in which the amount of transmitted data is limited may be, for example, an environment in which at least one of the observation device 2, the computer 1, and the terminal 3 performs communication while moving.

The communication means between the computer 1 and the observation device 2 and the communication means between the computer 1 and the terminal 3 are not limited to a network such as the Internet line and the mobile phone network described above, or a network constructed by virtualization using software. The communication means may be, for example, satellite communication, LPWA (low power wide area), or another communication means. The satellite communication is a communication method for performing data communication between the ground and an artificial satellite. The LPWA is suitable for, for example, a case where the distance between the observation device 2 and the computer 1 is relatively short, a case where the distance between the computer 1 and the terminal 3 is relatively short, and the like, and is also expected to have a cost reduction effect.

- 1: video switching computer
- 2: observation device
- 3: terminal
- 4: video channel
- 5: port
- 10: display rank setting unit
- 11: determination unit
- 20: importance level reception unit
- 21: instruction unit
- 22: acquisition unit
- 23: display output unit
- 30: video storage unit
- 40: information detection unit
- 41: importance level setting unit
- 42: image quality setting unit
- 43: acceleration detection unit
- 44: learning unit
- 50: importance level provision unit
- 51: instruction reception unit
- 52: video provision unit

## Claims

1. A video switching computer for switching between videos from a plurality of distributed observation devices, the video switching computer comprising:
an importance level reception unit that receives importance levels for the videos;
a display rank setting unit that sets display ranks for the videos based on the received importance levels;
an instruction unit that sends instructions to the observation devices corresponding respectively to the videos such that image quality for the videos is set based on the display ranks;
an acquisition unit that acquires, from the observation devices, the videos having the image quality set by the observation devices; and
an output unit that causes a terminal to output the acquired videos in accordance with the display ranks.

2. The video switching computer according to claim 1, wherein the output unit causes the terminal to output the video having the highest display rank in an enlarged manner.

3. The video switching computer according to claim 1 or 2, wherein the display rank setting unit sets the display rank to cause the terminal to output, in a vicinity of the video having the highest display rank, a video associated with the video having the highest display rank.

4. The video switching computer according to any one of claims 1 to 3, wherein the display rank setting unit raises a display rank for a video from an observation device positioned near the observation device that captures the video having the highest display rank.

5. The video switching computer according to any one of claims 1 to 4, further comprising a video storage unit that stores a video having a high importance level.

6. The video switching computer according to claim 5, wherein the output unit causes the terminal to output the stored video in accordance with the display rank.

7. The video switching computer according to any one of claims 1 to 6, wherein the importance level reception unit receives an input of the importance level from a user.

8. The video switching computer according to any one of claims 1 to 7, wherein the instruction unit sends an instruction to the observation device to increase or decrease the image quality by increasing or decreasing a resolution of the video.

9. The video switching computer according to any one of claims 1 to 8, wherein the instruction unit sends an instruction to the observation device to increase or decrease the image quality by increasing or decreasing a frame rate of the video.

10. An observation device communicably connected to the video switching computer according to any one of claims 1 to 9, the observation device comprising:
an information detection unit that detects information related to a video captured by the observation device;
an importance level setting unit that sets an importance level for the video based on the detected information;
an importance level provision unit that provides the set importance level to the video switching computer;
an instruction reception unit that receives the instruction from the video switching computer;
an image quality setting unit that sets image quality for a video to be captured based on the received instruction; and
a video provision unit that provides the video having the set image quality to the video switching computer.

11. The observation device according to claim 10, further comprising an acceleration detection unit that detects acceleration of the observation device,
wherein the image quality setting unit sets the image quality for the video to be captured to a low image quality when the detected acceleration is large.

12. The observation device according to claim 10 or 11, wherein the information detection unit detects the information based on a learned model.

13. A video switching method for switching between videos from a plurality of distributed observation devices, the method being executed by a computer, the method comprising the steps of:
receiving importance levels for the videos;
setting display ranks for the videos based on the received importance levels;
sending instructions to the observation devices corresponding respectively to the videos such that image quality for the videos is set based on the display ranks;
acquiring, from the observation devices, the videos having the image quality set by the observation devices; and
causing a terminal to output the acquired videos in accordance with the display ranks.

14. A computer-readable program that causes a computer to execute the steps of:
receiving importance levels for videos;
setting display ranks for the videos based on the received importance levels;
sending instructions to observation devices corresponding respectively to the videos such that image quality for the videos is set based on the display ranks;
acquiring, from the observation devices, the videos having the image quality set by the observation devices, and
causing a terminal to output the acquired videos in accordance with the display ranks.
